# EUROPEAN PATENT APPLICATION

(11) **EP 3 045 792 A1**
(43) Date of publication of application: **20.07.2016**
(21) Application number: 16151803.0
(22) Date of filing: 19.01.2016
(51) Int. Cl.: F16K 31/163, F16K 31/383, F16K 31/40, F16K 31/42, F15B 13/043, F16K 1/22

(54) **PNEUMATIC ACTUATOR LOW FLOW SERVO VALVE**

(30) Priority: 19.01.2015 US 201514599807
(71) Applicant: Hamilton Sundstrand Corporation, Windsor Locks, CT 06096-1010 (US)
(72) Inventor: SCHRODER, Bruce R., Agawam, MA Massachusetts 01001 (US)
(74) Representative: Bridge, Kerry Ann

(57) **Abstract**

A valve system includes a valve for controlling flow of a fluid and a valve controller for providing fluid to control the movement of a valve actuator. The valve includes a flow control device 28, a modulating chamber 52, and the valve actuator 26. The valve actuator 26 is movable within the modulating chamber 52 to open and close the flow control device 28. The valve controller includes a channel 44 within the valve controller and an inlet port 72 for connecting the channel 44 and a high pressure source. The valve controller also includes an exhaust port 74 for connecting the channel 44 and an ambient pressure and a modulating port connecting the channel to the modulating chamber. The valve controller further includes an armature 70 movable relative to the channel. The armature 70 closes the inlet port and the exhaust port 74 in a first position, the armature 70 opens the inlet port and closes the exhaust port in a second position, and the armature opens the exhaust port and closes the inlet port in a third position. The valve controller also includes an electromagnetic motor adjacent to the channel for moving the armature 70.

## Description

### BACKGROUND

Pneumatic valves are one of many components that can be used in a system that controls the flow of a fluid through the system. Pneumatic valves are control devices that are powered by pressurized fluid, normally air. In many circumstances, pneumatic pressure is supplied to the driving, or actuating, portion of the valve from a pressure source. The driving portion of the valve transforms pneumatic pressure into mechanical power for operating or actuating a control mechanism in a supply line, duct, or pipe. The control mechanism may be an isolation valve having only two positions, open and closed, where the open position allows flow to pass and the closed position stops flow. The control mechanism may also be a control valve that is capable of modulating flow of the fluid it is controlling. For example, the control valve may allow fluid to pass in increments of one percent from zero percent to one hundred percent.

To control the supply of fluid into the driving portion of a pneumatic valve, a controlling device is often used. The controlling device regulates flow of the fluid into the driving portion of the pneumatic actuator using nozzles or control orifices that are regulated. One example of a controlling device is a torque motor, which uses an electromagnetic motor to control the opening and closing of nozzles to selectively provide air to the driving portion of a pneumatic actuator.

### SUMMARY

A valve system includes a valve for controlling flow of a fluid and a valve controller for providing fluid to control the movement of a valve actuator. The valve includes a flow control device, a modulating chamber, and the valve actuator. The valve actuator is movable within the modulating chamber to open and close the flow control device. The valve controller includes a channel within the valve controller and an inlet port for connecting the channel and a high pressure source. The valve controller also includes an exhaust port for connecting the channel and an ambient pressure and a modulating port connecting the channel to the modulating chamber. The valve controller further includes an armature movable relative to the channel. The armature closes the inlet port and the exhaust port in a first position, the armature opens the inlet port and closes the exhaust port in a second position, and the armature opens the exhaust port and closes the inlet port in a third position. The valve controller also includes an electromagnetic motor adjacent to the channel for moving the armature.

Another embodiment is a method for controlling a valve. The method includes electromagnetically driving an armature to open an inlet port of a valve controller, and to close an exhaust port of the valve controller, which connects a high pressure source to a chamber of a valve causing the valve to open. The method also includes electromagnetically driving the armature to close the inlet port and open the exhaust port, which connects the chamber to ambient, causing the valve to close. The method further includes electromagnetically driving the armature to close the inlet port and the exhaust port, which disconnects the chamber from ambient and the high pressure source, causing the valve to maintain its position.

### BRIEF DESCRIPTION OF THE DRAWINGS

FIG. 1 is a schematic view of a portion of an aircraft bleed system.
FIG. 2 is a schematic view of a bleed control valve system.
FIGS. 3A-3C are schematic views of a valve controller in three positions.

### DETAILED DESCRIPTION

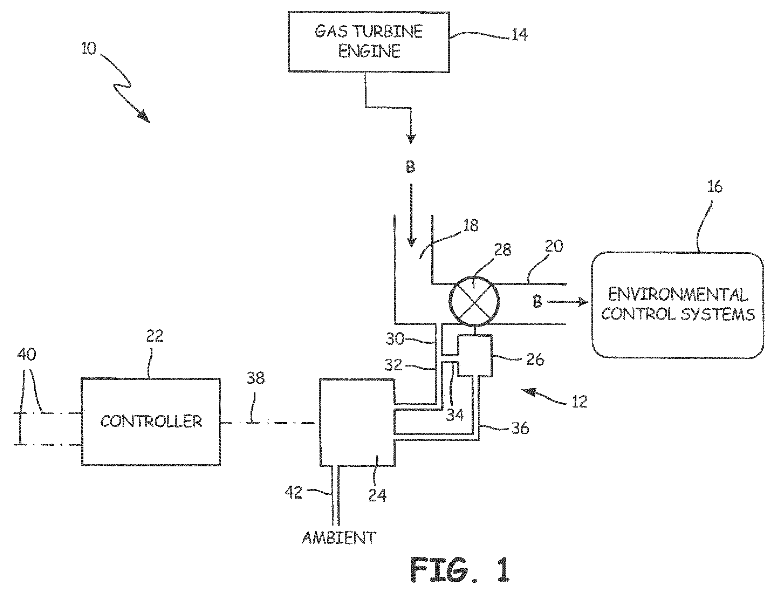

FIG. 1 is a schematic view of a portion of aircraft bleed system 10, which includes bleed control valve 12, gas turbine engine 14, environmental control system 16, upstream duct 18, downstream duct 20, controller 22, and torque motor 24. Bleed control valve 12 includes actuator 26, control device 28, bleed inlet duct 30, torque motor supply 32, supply duct 34, modulating duct 36. Also displayed in FIG. 1 are torque motor input 38, controller inputs 40, exhaust duct 42, and bleed stream B.

Gas turbine engine 14 supplies bleed stream B to the inlet of upstream duct 18. Upstream duct 18 connects to the inlet of control device 28 of bleed control valve 12. The outlet of control device 28 connects to the inlet of downstream duct 20. The outlet of downstream duct 20 is connected to environmental control system 16.

Upstream duct 18 is connected through bleed inlet duct 30 and torque motor supply 32 to torque motor 24. Upstream duct 18 is also connected to actuator 26 through bleed inlet duct 30 and supply duct 34. Torque motor 24 connects to actuator 26 through modulating duct 36. Torque motor 24 is also connected to exhaust duct 42, which connects to ambient. Actuator 26 is physically connected to control device 28. Controller 22 is electrically connected to torque motor input 38, which also electrically connects to torque motor 24. Also electrically connected to controller 22 are controller inputs 40. Control inputs 40 can be connected to measurement devices within gas turbine engine 14, environmental control system 16, aircraft bleed control system 10, another controller within these systems, or any other signal source within an aircraft.

Aircraft bleed system 10 is a bleed control system for an aircraft. According to one embodiment of aircraft bleed system 10, gas turbine engine 14 provides bleed stream B from a component within gas turbine engine 14, such as a compressor. Bleed stream B is then routed through gas turbine engine 14 and into upstream duct 18 where it travels through upstream duct 18 and encounters two possible flow paths. In the first path, bleed stream B may travel to control device 28 of bleed control valve 12, where bleed stream B may be regulated. For example, control device 28 may be in an open position allowing bleed stream B to flow past control device 28 and into downstream duct 20, where bleed stream B can continue to environmental control system 16. Thereafter, processes may be performed on or by bleed stream B, such as heating or cooling. If control device 28 is in a closed position, bleed stream B may be stopped at control device 28, preventing bleed stream B from flowing into downstream duct 20.

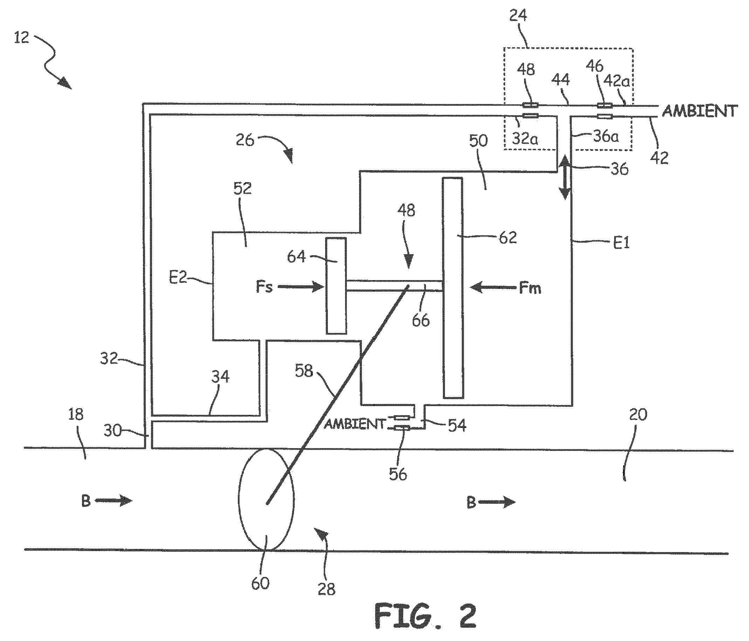

In the second path, bleed stream B travels to bleed inlet duct 30, where bleed stream B can travel in two directions. In the first direction, bleed stream B can travel to supply duct 34 and on to actuator 26 to provide pneumatic pressure to actuator 26 (as described in FIG. 2). In the second direction, bleed stream B can travel to torque motor supply 32 and on to torque motor 24. The flow of bleed stream B through torque motor 24 is regulated by components within torque motor 24 (as discussed later). Following passing through torque motor 24, bleed stream B may travel into modulating duct 36 and into another inlet of actuator 26, where bleed stream B can provide pneumatic pressure to actuator 26 (as described in FIG. 2). Bleed stream B may also exit torque motor 24 through exhaust duct 42.

Torque motor 24 receives control signals from controller 22 through torque motor input 38. These signals notify torque motor 24 how to control the flow of bleed stream B through torque motor. Controller 22 makes determinations on how to control torque motor 24 based on calculations performed within controller 22. These calculations are performed based on inputs received through control inputs 40.

FIG. 2 is a schematic view of bleed control valve 12. Bleed control valve 12 includes torque motor 24, actuator 26, control device 28, bleed inlet duct 30, torque motor supply 32, supply duct 34, modulating duct 36, and exhaust duct 42. Torque motor 24 includes channel 44, downstream nozzle 46, upstream nozzle 48, internal torque motor supply 32a, internal modulating duct 36a, and internal exhaust duct 42a.

Actuator 26 includes piston assembly 48, modulating chamber 50, supply chamber 52, vent duct 54, and vent nozzle 56. Control device 28 includes linkage 58 and disc 60. Piston assembly 48 includes modulating piston 62, supply piston 64, and piston rod 66. Also illustrated in FIG. 2 are upstream duct 18, downstream duct 20, modulating force Fm, supply force Fs, ends E1 and E2, and bleed stream B.

Consistent with FIG. 1, upstream duct 18 connects to the inlet of bleed control valve 28. The outlet of bleed control valve 28 is connected to downstream duct 20. Also connected to upstream duct 18 is bleed inlet duct 30, which also connects to supply duct 34 and torque motor supply 32. Supply duct 34 also connects to actuator 26 at modulating chamber 52 near end E2.

Torque motor supply 32 continues into torque motor 24 where it becomes internal bypass duct portion 32a. Within torque motor 24 internal torque motor supply 32a connects to upstream nozzle 48, which connects to channel 44. Channel 44 connects to internal modulating duct 36a and downstream nozzle 46. Downstream nozzle 46 connects to exhaust duct 42a, which terminates to ambient through exhaust duct 42. Internal modulating duct 36a is the portion of modulating duct 36 connected to channel 44. Internal modulating duct 36a continues out of torque motor 24 where it becomes modulating duct 36, eventually connecting to modulating chamber 50 near end E1.

Within actuator 26 is piston assembly 48. Modulating piston 62 resides within modulating chamber 50. Modulating piston 62 is connected to the end of rod 66 most near end E1 of actuator 26. Supply piston 64 is connected to rod 66 at the end of rod 66 nearest end E2 of actuator 26. Supply piston 64 is located inside supply chamber 52. Supply piston 64 and modulating piston 62 may be fastened to rod 66 using pins, a welding process, or other fastening means or device. Or, supply piston 64 and modulating piston 62 may be integrated into a single part with rod 66. Also connected to rod 66 is linkage 58. Linkage 58 also connects to disc 60, which is located within control device 28.

Piston assembly 48 is movable within actuator 26. However, modulating piston 62 is only movable within modulating chamber 50 and supply piston 64 is only movable within supply chamber 52. Supply piston 64 forms a seal in supply chamber 52 allowing little or no air to travel around supply piston 64. Similarly, modulating piston 62 forms a seal in modulating chamber 50. Disc 60, in the closed position (not shown in FIG. 2), forms a seal in control device 28 and therefore in downstream duct 20. This seal prevents bleed stream B from flowing from upstream duct 18 to downstream duct 20 when disc 60 is closed.

Linkage 58 is pivotably connected to rod 66. Linkage 58 transforms linear motion of piston assembly 48 into rotational motion of disc 60. When piston assembly 48 is positioned in accordance with FIG. 2, disc 60 is in an open position, allowing bleed stream B to flow through control device 28. Also, a portion of bleed stream B will travel through bleed inlet duct 30 to torque motor supply 32, where it will be stopped at upstream nozzle 48. Similarly, a portion of bleed stream B will travel through bleed inlet duct 30 to supply duct 34 and into supply chamber 52. Supply chamber 52 will be pressurized by bleed stream B.

The portion of bleed stream B that pressurizes supply chamber 52 will apply a pressure onto the side of supply piston 64 most near end E2. This pressure results in supply force Fs. While disc 60 is still, or not rotating, a portion of bleed stream B pressurizes modulating chamber 50, and is held in place because upstream nozzle 48 and downstream nozzle 46 are closed. The pressure in modulating chamber 50 will apply a pressure onto the side of supply piston 64 most near end E1. This pressure results in modulating force Fm. Because modulating force Fm remains constant and supply force Fs is constant (when the pressure of bleed stream B is constant), modulating force Fm and supply force Fs balance, holding disc 60 in place.

When controller 22 (of FIG. 1) determines that disc 60 needs to close, controller 22 will send a signal to torque motor 24 to close disc 60. To accomplish this, torque motor 24 will open downstream nozzle 46, which is connected to ambient (where ambient pressure is much lower than the pressure of bleed stream B). The pressurized fluid within modulating chamber 50 will then flow out through modulating duct 36, to internal modulating duct 36a, through channel 44, to downstream nozzle 46, through internal exhaust duct 42a, through exhaust duct 42, and to ambient. This results in a drop in pressure within modulating chamber 50. As the pressure in modulating chamber 50 decreases, so does modulating force Fm, as F = P * A, (where F is force, P is pressure, and A is area). As modulating force Fm decreases, it will eventually become lower than supply force Fs. Once supply force Fs is larger than modulating force Fm (and any other forces acting on piston assembly 48), piston assembly 48 will move in the direction of supply force Fs (from end E2 to end E1). The result is a linear motion of piston assembly 48, which creates a movement of linkage 58. Linkage 58 transforms the linear motion of piston assembly 48 into rotational movement of disc 60, turning disc 60 to a closed position. Upon closing disc 60, downstream nozzle 46 may then close, maintaining ambient pressure in modulating chamber 50, and maintaining the pressure of bleed stream B in supply chamber 52.

Conversely, when controller 22 (of FIG. 1) determines that disc 60 needs to open, controller 22 will send a signal to torque motor 24 to open disc 60. To accomplish this, torque motor 24 will open upstream nozzle 48, which is connected to bleed stream B through internal torque motor supply 32a, torque motor supply 32, and bleed inlet 30. Bleed stream B will flow through this path into torque motor 24, and will continue through modulating duct 36 and into modulating chamber 50. This results in an increase in pressure within modulating chamber 50. As the pressure in modulating chamber 50 increases, so does modulating force Fm, as F = P * A.

The face area of modulating piston 62 is larger than the face area of supply piston 64. As F = P * A, the same pressure acting on the faces of modulating piston 62 and supply piston 64 results in modulating force Fm being larger than supply force Fs. In many cases, modulating force Fm may become larger than supply force Fs, even when the pressure acting on modulating piston 62 is smaller than the pressure acting on supply piston 64.

As modulating force Fm increases, it will eventually become greater than supply force Fs. Once modulating force Fm is larger than supply force Fs (and any other forces acting on piston assembly 48), piston assembly 48 will move in the direction of modulating force Fm (from end E1 to end E2). The result is a linear motion of piston assembly 48, which creates a movement of linkage 58. Linkage 58 transforms the linear motion into rotational movement of disc 60, turning disc 60 towards an open position. This allows bleed stream B (or more of bleed stream B) to flow through control device 28 and on to downstream duct 20.

When controller 22 determines that the position of disc 60 is acceptable, or when disc 60 is at a full open position, controller 22 may send a signal to torque motor 24 for upstream nozzle 48 to be closed, maintaining the current pressure in modulating chamber 50, resulting in a balance in forces, which prevents disc 60 from rotating.

The command signal provided by torque motor 24 (or controller 22 depending on whether a controller is located within torque motor 24) to open and close upstream and downstream nozzles 48 and 46 is simple. For example, when upstream nozzle 48 is open, a signal may be sent to close upstream nozzle 48. This signal can continue to close upstream nozzle 48 until it is fully closed. The signal can then command downstream 46 nozzle to open, which can continue until downstream nozzle is fully open. At any time the signal may reverse. For example, if a signal is being sent to open downstream nozzle 46, the signal may be changed to close downstream nozzle 46. This command signal system is very simple making control algorithms simpler and faster than in prior art, where nozzles overlap in operation and constantly open.

The disclosed system overcomes many problems in the prior art. One of those problems is heat. Bleed stream B, typically having a source of a compressor of gas turbine engine 14, is very hot. Therefore, bleed stream B will heat up torque motor 24 when upstream nozzle 48 is open and bleed stream B is flowing through upstream nozzle 48. In prior art, bleed stream B typically flows through torque motor 24 at all times causing torque motor 24 to heat up to the temperature of bleed stream B, which may approach (or surpass) 1000 degrees Fahrenheit (538C). These temperatures can be damaging to electrical components within torque motor 24, resulting in failure of the electrical components, and ultimately failure of torque motor 24. Typical torque motors are capable of tolerating temperatures less than 500 degrees Fahrenheit (260C).

These problems may become exacerbated by direct mounting of torque motor 24 to control valve 12. This is because direct mounting allows for heat to be conductively transferred from control valve 12 to torque motor 24, as opposed to remote mounting, where the only heat transfer to torque motor 24 is from bleed stream B. Remote mounting of torque motor 24 is a common solution for dealing with heat in the prior art, but comes at the expense of routing lines from control valve 12 to torque motor 24. Remote lines add cost, weight, and potential leak sources, and create lag in operation of control valve 12 caused by delays in torque motor 24 sending and receiving fluid over a distance.

Also, bleed stream B is typically dirty air. This dirty air has the capability of clogging upstream and downstream nozzles 48 and 46 within torque motor 24, because the orifices of upstream and downstream nozzles 48 and 46 are often very small. Clogging of upstream and downstream nozzles 48 and 46 within torque motor 24 can cause failure of torque motor 24, requiring replacement of, or service on, torque motor 24.

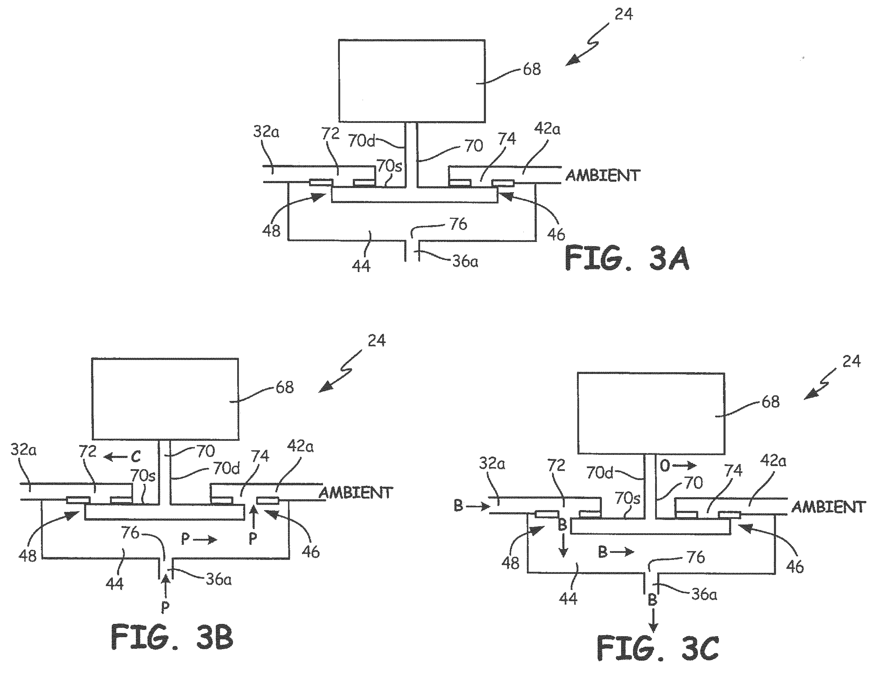

The disclosed system overcomes these issues through its low flow capability. As discussed further in FIGS. 3A-3C, only one of upstream or downstream nozzles 48 or 46 is open during operation, or both upstream and downstream nozzles 48 and 46 will be closed. This means bleed stream B is not constantly flowing through torque motor 24. This keeps torque motor 24 cleaner and cooler, increasing the life of torque motor 24.

FIGS. 3A-3C are schematic views illustrating the functionality of torque motor 24, and not necessarily the physical characteristics of torque motor 24.

FIG. 3A is a schematic view of torque motor 24 in a closed position. FIG. 3B is a schematic view of torque motor 24 in a position where downstream nozzle 46 is open. FIG. 3C is a schematic view of torque motor 24 in a position where upstream nozzle 48 is open. FIGS 3A-3C includes torque motor 24. Torque motor 24 includes channel 44, downstream nozzle 46, upstream nozzle 48, internal torque motor supply 32a, internal modulating duct 36a, and internal exhaust duct 42a. Further included in torque motor 24 are driver 68, armature 70, inlet port 72 and exhaust port 74. Armature 70 includes armature linkage 70ℓ and armature shuttle 70s. Also illustrated in FIG. 3B is movement arrow C and pressurized stream P. Also illustrated in FIG. 3C is bleed stream B and movement arrow O.

FIGS. 3A-3C are connected to other components of aircraft bleed system 10 consistent with FIGS 1 and 2. Within FIGS. 3A-3C, the components of torque motor 24 are consistently connected, as follows. Driver 68 connects to armature linkage 70ℓ of armature 70. Armature linkage 70ℓ extends into channel 44 where it connects to armature shuttle 70s. Armature linkage 70ℓ may be a physical linkage to armature shuttle 70s, or an electromagnetic linkage for driving armature shuttle 70s. Armature shuttle 70s extends to upstream and downstream nozzles 48 and 46. Internal torque motor supply 32a connects to inlet port 72 of upstream nozzle 48. Inlet port 72 connects to channel 44. Channel 44 also connects to port 76, which connects to modulating duct 36a. Also connected to channel 44 is exhaust port 74, of downstream nozzle 46, which further connects to internal exhaust duct 42a. Internal exhaust duct 42a is in communication with ambient through exhaust duct 42 (of FIG. 2).

Driver 68 is capable of moving armature 70. Driver 68 can be an electromagnetic motor or any electromagnetic driver capable of moving armature 70. Driver 68 may include a controller capable of receiving signals from controller 22 and capable of outputting a drive signal to the electromagnetic coils, or other device converting electrical energy into mechanical movement within driver 68. In one example of operation, driver 68 can receive a signal from controller 22 indicating that control device 28 should be opened. Driver 68 can then allow for electrical power to travel to electromagnetic coils within driver 68 to induce movement of armature 70 in the direction of movement arrow O (of FIG. 3C). Driver 68 can move armature 70 in a similar fashion, but in the direction of movement arrow C (of FIG. 3B), upon receipt of a signal from controller 22 to close control device 28, or to hold the position of control device 28. In sum, armature 70 is movable within channel 44 to cover and uncover inlet and exhaust ports 72 and 74 to induce opening, closing, or holding the position of control device 28.

In FIG. 3A, armature shuttle 70s is shown as completely covering inlet port 72 and exhaust port 74. In this position, torque motor 24 is closed, allowing no flow to pass through inlet port 72, exhaust port 74, or port 76. In this position of armature 70, piston assembly 48 (of FIG. 2) would lead to a balance of modulating force Fm and supply force Fs, maintaining the position of disc 60, as discussed in FIG. 2.

In FIG. 3B, armature shuttle 70s has moved in the direction of movement arrow C, uncovering a portion of exhaust port 74 while completely covering inlet port 72. When this occurs, pressurized stream P is created from the volume of pressurized fluid contained in modulating chamber 50 (of FIG. 2). Pressurized stream P can then flow out of modulating chamber 50 to modulating duct 36, through internal modulating duct 36a, through port 76 and into channel 44. Because inlet port 72 is closed and exhaust port 74 is open, pressurized stream P will flow out of channel 44 through exhaust port 74, into internal exhaust duct 42a, to exhaust duct 42 to ambient. This results in a rotational closing of disc 60 as described in FIG. 2.

In FIG. 3C, armature shuttle 70s has moved in the direction of movement arrow O, uncovering a portion of inlet port 72 and completely covering exhaust port 74. When this occurs, bleed stream B may travel from upstream duct 18, into bleed inlet duct 30, into torque motor supply 32, to internal torque motor supply 32a, through inlet port 72 and into channel 44. Because inlet port 72 is open, port 76 is open, and exhaust port 74 is closed, bleed stream B will flow out of channel 44 through port 76, into internal modulating duct 36a, to modulating duct 36 and to modulating chamber 50. This results in a rotational opening of disc 60 as described in FIG. 2.

In the prior art, the inlet and exhaust ports are always partially open allowing bleed stream B to constantly flow into the channel. As discussed above, this heats components of the torque motor, which contains electrical components that are susceptible to failure from high temperatures and from thermal cycling.

The above embodiments address these issues by reducing the flow of bleed stream B through torque motor 24, in other words, torque motor 24 is a low flow torque motor. In these embodiments, bleed stream B only flows through torque motor 24 when armature 70 is positioned as it is shown in FIG. 3C, to open upstream nozzle 48. In the configurations shown in FIGS. 3A and 3B, bleed stream B is not flowing into channel 44 of torque motor 24. By reducing the flow of bleed stream B through torque motor 24, the operating temperature of torque motor 24 is reduced significantly. This increases the life of torque motor 24 and decreases the chance of component failure. Additionally, because torque motor 24 operates at reduced temperature, components within torque motor 24 may not require as high of a heat resistance as in the prior art. For example, windings may be coated with a coating that is less heat resistant, which are often less expensive. Also, due to operating at lower temperatures, directly mounting torque motor 24 to actuator 26 results in component failure at lower rate.

Additionally, because bleed stream B is dirty, allowing bleed stream B to flow through torque motor 24 less frequently decreases the amount of dirt and debris that will be trapped inside torque motor 24. This increases the life of torque motor 24 and decreases the chance of component failure. Further, because bleed stream B will travel through torque motor 24 much less frequently than in the prior art, the service interval of upstream filters (not shown) may be reduced by the methods of this disclosure, further reducing the cost of torque motor 24.

FIGS. 3A-3C depict torque motor 24 schematically. The internal components of torque motor 24, such as armature 70 and channel 44, can take many physical shapes not illustrated in FIGS. 3A-3C. For example, armature 70 may be a cylindrical armature placed over channel 44, which is also cylindrical, where armature 40 moves up and down to cover and reveal inlet and exhaust ports 72 and 74. Armature 70 and upstream and downstream nozzles 48 and 46 within torque motor 24, though depicted as a bar covering holes, may be any nozzle capable of controlling the flow of fluid. For example, upstream and downstream nozzles 48 and 46 may be a sheer-orifice design. Also, torque motor 24, though described as an electromagnetic torque motor, may be any control device, valve controller, or servo valve capable of operating a pneumatic control device. Further, upstream and downstream nozzles 48 and 46 can have single or multiple ports and inlet and exhaust ports 72 and 74 can be any geometric shape allowing for flow of fluid to be modulated under pressure.

Bleed control valve 12, though simply described as a valve for controlling the flow of bleed air in an aircraft system, can be a servo, or any other control valve within an aircraft system. Bleed control valve 12 can also be a control valve in any other system or process, for example a valve for controlling a hot process fluid.

Upstream duct 18, downstream duct 20, bleed inlet duct 30, torque motor supply 32, supply duct 34, modulating duct 36, exhaust duct 42, and vent duct 54 be ducts, pipes, tubes, ports or any other passageways capable of supporting pressurized flow. These passageways may be made of metal, plastic, or any other material suited for allowing the flow of pressurized fluid.

Rod 66, supply piston 64, and modulating piston 62 can be made of steel, aluminum, plastic, or any other material allowing for piston assembly 48 to operate in accordance with this disclosure.

Disc 60, though described as a disc similar to that found in a butterfly valve, can also be a ball, gate, or any other flow modulating device.

Linkage 58 is shown as connecting to rod 66 between supply piston 64 and modulating piston 62; however, linkage 58 may connect to piston assembly 48 anywhere, so long as the functionality of linkage 58 described herein is maintained. Linkage 58 may be pinned, or otherwise pivotably mounted, so long as linkage 58 is capable of transforming the linear motion of piston assembly 66 into rotational motion of disc 60.

Though the present disclosure describes a valve being used in a bleed system of an environmental control system, the pneumatic valve system described above may be used in any pneumatic control system. Further, the pneumatic valve described herein may be applied to hydraulics or any other fluid powered valve.

An aircraft valve system includes a valve and a low flow valve controller, such as a torque motor, for providing pressurized fluid to an actuator of the valve. The low flow valve controller receives less air flow than a standard valve controller, thereby staying cleaner and operating at lower temperatures than a standard valve controller, which increases the life of the valve controller.

### Discussion of Possible Embodiments

The following are non-exclusive descriptions of possible embodiments of the present invention.

In one embodiment, a valve system includes a valve for controlling flow of a fluid and a valve controller for providing fluid to control the movement of a valve actuator. The valve includes a flow control device, a modulating chamber, and the valve actuator. The valve actuator is movable within the modulating chamber to open and close the flow control device. The valve controller includes a channel within the valve controller and an inlet port for connecting the channel and a high pressure source. The valve controller also includes an exhaust port for connecting the channel and an ambient pressure and a modulating port connecting the channel to the modulating chamber. The valve controller further includes an armature movable relative to the channel. The armature closes the inlet port and the exhaust port in a first position, the armature opens the inlet port and closes the exhaust port in a second position, and the armature opens the exhaust port and closes the inlet port in a third position. The valve controller also includes an electromagnetic motor adjacent to the channel for moving the armature.

The system of the preceding paragraph can optionally include, additionally and/or alternatively, any one or more of the following features, configurations and/or additional components.

The movement of the armature can be linear.

The valve controller can be a torque motor.

The inlet port can connect to an upstream side of the control device.

The control device can be a butterfly valve.

The valve can be a servo.

A controller that can send control signals to the torque motor. The control signals can direct the torque motor to open and close the flow control device.

An aircraft environmental cooling system can include the valve system and a controller that can provide command signals to the valve controller.

The high pressure source can comprise bleed air from a gas turbine engine.

Another embodiment is a method for controlling a valve. The method includes electromagnetically driving an armature to open an inlet port of a valve controller, and to close an exhaust port of the valve controller, which connects a high pressure source to a chamber of a valve causing the valve to open. The armature is electromagnetically driven to close the inlet port and open the exhaust port, which connects the chamber to ambient, causing the valve to close. The armature is electromagnetically driven to close the inlet port and the exhaust port, which disconnects the chamber from ambient and the high pressure source, causing the valve to maintain its position.

The system of the preceding paragraph can optionally include, additionally and/or alternatively, any one or more of the following features, configurations and/or additional components, or steps.

Command signals can be sent for moving an armature from a controller to the valve controller.

A motor connected to the armature can be driven as a function of the command signals.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A valve system comprising:
a valve for controlling flow of a fluid, the valve comprising:
a flow control device (28);
a modulating chamber; and
a valve actuator (26) movable within the modulating chamber (52) to open and close the flow control device (28); and
a valve controller for providing fluid to control the movement of the valve actuator (26), the valve controller comprising:
a channel (44) within the valve controller;
an inlet port (72) for connecting the channel (44) and a high pressure source;
an exhaust port (74) for connecting the channel and an ambient pressure;
a modulating port connecting the channel (44) to the modulating chamber;
an armature (70) movable relative to the channel (44),
wherein the armature closes the inlet port and the exhaust port in a first position, wherein the armature opens the inlet port and closes the exhaust port in a second position, and wherein the armature opens the exhaust port and closes the inlet port in a third position; and
an electromagnetic motor adjacent to the channel for moving the armature (70).

2. The valve system of claim 1, wherein movement of the armature (70) is linear.

3. The valve system of claim 1 or 2, wherein the valve controller is a torque motor.

4. The valve system of claim 1 or 2, wherein the inlet port connects to an upstream side of the control device.

5. The valve system of claim 4, wherein the valve controller is a torque motor (24).

6. The valve system of any of claims 1 to 3, wherein the control device is a butterfly valve.

7. The valve system of any of claims 1 to 3, wherein the valve is a servo.

8. The valve system of any preceding claim and further comprising a controller for sending control signals to the torque motor (24), wherein the control signals direct the torque motor to open and close the flow control device.

9. An aircraft environmental cooling system, including the valve system of any preceding claim, and further comprising a controller that provides command signals to the valve controller.

10. The aircraft environmental cooling system of claim 9, wherein the high pressure source comprises bleed air from a gas turbine engine.

11. The aircraft environmental cooling system of claim 10, wherein the valve controller is mounted directly to the valve.

12. A method for controlling a valve, the method comprising:
electromagnetically driving an armature (70) to open an inlet port (72) of a valve controller, and to close an exhaust port (74) of the valve controller, which connects a high pressure source to a chamber of a valve causing the valve to open;
electromagnetically driving the armature (70) to close the inlet port (72) and open the exhaust port 74, which connects the chamber to ambient, causing the valve to close; and
electromagnetically driving the armature (70) to close the inlet port (72) and the exhaust port (74), which disconnects the chamber from ambient and the high pressure source, causing the valve to maintain its position.

13. The method of claim 12, and further comprising:
sending command signals for moving the armature (70) from a controller to the valve controller.

14. The method of claim 12 or 13, and further comprising:
driving a motor connected to the armature (70) as a function of the command signals.
